(19) Europäisches Patentamt
European Patent Office
Office européen des brevets

(11) **EP 2 587 424 A1**

(12) **EUROPEAN PATENT APPLICATION**

(43) Date of publication:
**01.05.2013 Bulletin 2013/18**

(51) Int Cl.:
**G06Q 10/06** *(2012.01)*

(21) Application number: **12190577.2**

(22) Date of filing: **30.10.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.10.2011 US 201113285986**

(71) Applicant: **General Electric Company**
**Schenectady, NY 12345 (US)**

(72) Inventors:
• **Nowicki, Katherine Tharp**
**Cincinnati, OH Ohio 45215 (US)**

• **Osborn, Brock Estel**
**Niskayuna, NY New York 12309 (US)**
• **Graham, Michael Evans**
**Niskayuna, NY New York 12309 (US)**
• **Agarwal, Harish**
**Cincinnati, OH Ohio 45215 (US)**

(74) Representative: **Williams, Andrew Richard**
**Global Patent Operation - Europe**
**GE International Inc**
**15 John Adam Street**
**London WC2N 6LU (GB)**

(54) **Methods and systems for selecting a workscope for a system**

(57)    A server (100) for use in selecting a workscope for a system includes a prediction tool (202) configured to identify a plurality of workscopes for the system, wherein each workscope defines a plurality of maintenance activities for a plurality of components of the system. The server also includes a financial model tool (204) coupled to the prediction tool, and an analyzer tool (206) coupled to the prediction tool and the financial model tool. The financial model tool is configured to receive the plurality of workscopes and determine an expected financial impact of the maintenance activities of each workscope for a plurality of future maintenance events. The analyzer tool is configured to receive the plurality of workscopes from the prediction tool, receive the expected financial impact of the maintenance activities from the financial model tool, and determine an expected effect of each workscope during a predefined time interval that includes the future maintenance events.

FIG. 2

**Description**

BACKGROUND OF THE INVENTION

The present application relates generally to power systems and, more particularly, to methods and systems for selecting a workscope for a system.

The market for long-term contractual agreements has grown at high rates over recent years for many service organizations. As the service organizations establish long-term contractual agreements with their customers, it becomes important to understand the expected costs and risks associated with the pricing of service contracts and portfolio management of the contracts. In addition, the service organizations need to have an understanding of the planning of repairs (shop workload planning) and how the maintenance of components will affect a cost of their service contracts. In order to analyze these issues, it is necessary to correctly model the underlying behavior of the product or system so that each can be serviced in the most cost-effective manner.

At least some known analytical practices are unable to accurately model service requirements for complex products or systems for multiple future service visits. Typically, these models contain poor cost information which result in the service organization inefficiently managing the risk associated with their service portfolios and/or failing to account for effects relating to performing or not performing maintenance on system components, which all lead to lower long-term contract profitability.

BRIEF DESCRIPTION OF THE INVENTION

In one embodiment, a server for use in selecting a workscope for a system is provided that includes a prediction tool configured to identify a plurality of workscopes for the system, wherein each workscope defines a plurality of maintenance activities for a plurality of components of the system. The server also includes a financial model tool coupled to the prediction tool, and an analyzer tool coupled to the prediction tool and the financial model tool. The financial model tool is configured to receive the plurality of workscopes and determine an expected financial impact of the maintenance activities of each workscope for a plurality of future maintenance events. The analyzer tool is configured to receive the plurality of workscopes from the prediction tool, receive the expected financial impact of the maintenance activities from the financial model tool, and determine an expected effect of each workscope during a predefined time interval that includes the future maintenance events.

In another embodiment, a method of selecting a workscope for a system is provided that includes identifying a plurality of workscopes for the system, wherein each workscope defines a plurality of maintenance activities for a plurality of components of the system. The method also includes determining an expected financial impact of the maintenance activities of each workscope for a plurality of future maintenance events, and determining an expected effect of each workscope during a predefined time interval that includes the future maintenance events.

In yet another embodiment, a computer-readable medium including computer-executable instructions stored thereon is provided that, when executed by a processor, cause the processor to identify a plurality of workscopes for the system, wherein each workscope defines a plurality of maintenance activities for a plurality of components of the system. The instructions also cause the processor to determine an expected financial impact of the maintenance activities of each workscope for a plurality of future maintenance events, and determine an expected effect of each workscope during a predefined time interval that includes the future maintenance events.

BRIEF DESCRIPTION OF THE DRAWINGS

Fig. 1 is a block diagram of an exemplary server that may be used to select a workscope for a system.

Fig. 2 is a block diagram of a plurality of software tools that may be used with the server shown in Fig. 1.

Fig. 3 is a flow diagram of an exemplary method of selecting a workscope for a system that may be used with the server shown in Fig. 1.

DETAILED DESCRIPTION OF THE INVENTION

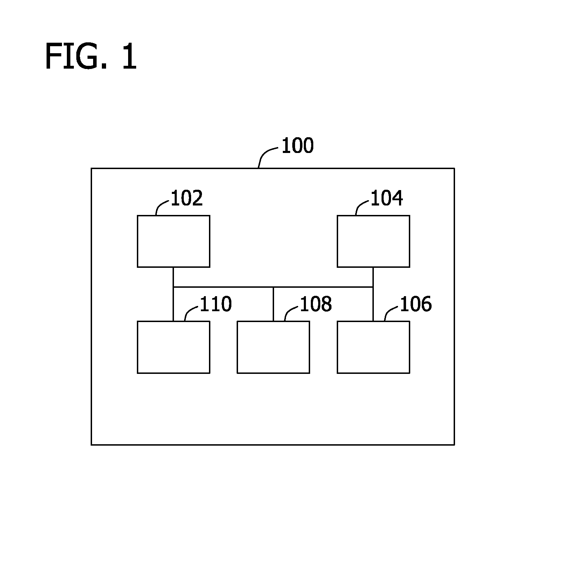

Fig. 1 illustrates an exemplary server 100 that may be used to select a workscope for a machine or a system, or a component thereof. In one embodiment, the machine or system is a gas turbine engine of an aircraft. Alternatively, the machine or system may be any other portion of an aircraft or of any other system. In the exemplary embodiment, server 100 is a computing device that includes a processor 102, a memory device 104, a display 106, a user interface 108, and a network interface 110.

Processor 102 includes any suitable programmable circuit including one or more systems and microcontrollers, microprocessors, reduced instruction set circuits (RISC), application specific integrated circuits (ASIC), programmable logic circuits (PLC), field programmable gate arrays (FPGA), and any other circuit capable of executing the functions described herein. The above examples are exemplary only, and thus are not intended to limit in any way the definition and/or meaning of the term "processor."

Memory device 104 includes a computer-readable medium, such as, without limitation, random access memory (RAM), flash memory, a hard disk drive, a solid state drive, a diskette, a flash drive, a compact disc, a digital video disc, and/or any suitable memory. In the exemplary embodiment, memory device 104 includes data and/or instructions that are executable by processor 102 (i.e., processor 102 is programmed by the instructions) to enable processor 102 to perform the functions described herein.

Display 106 includes, without limitation, a liquid crystal display (LCD), a vacuum fluorescent display (VFD), a cathode ray tube (CRT), a plasma display, a light-emitting diode (LED) display, one or more LEDs, and/or any suitable visual output device capable of displaying graphical data and text to a user.

User interface 108 includes, without limitation, a keyboard, a keypad, a touch-sensitive screen, a mouse, a scroll wheel, a pointing device, an audio input device employing speech-recognition software, and/or any suitable device that enables a user to input data into server 100. In one embodiment, aspects of user interface 108 are incorporated into display 106, for example, in a touch-sensitive screen, such that a user can input data into server 100 through display 106.

Network interface 110 may include, without limitation, a network interface controller (NIC), a network adapter, a transceiver, or any other communication device that enables server 100 to operate as described herein. Server 100 may communicate with other servers, systems, and/or devices using network interface 110.

In the exemplary embodiment, server 100 includes one or more software tools (not shown in Fig. 1) that are at least partially stored within memory device 104 as computer-executable instructions executed by processor 102. The software tools facilitate enabling server 100 to select a workscope to be performed on the machine, system, device, and/or components thereof.

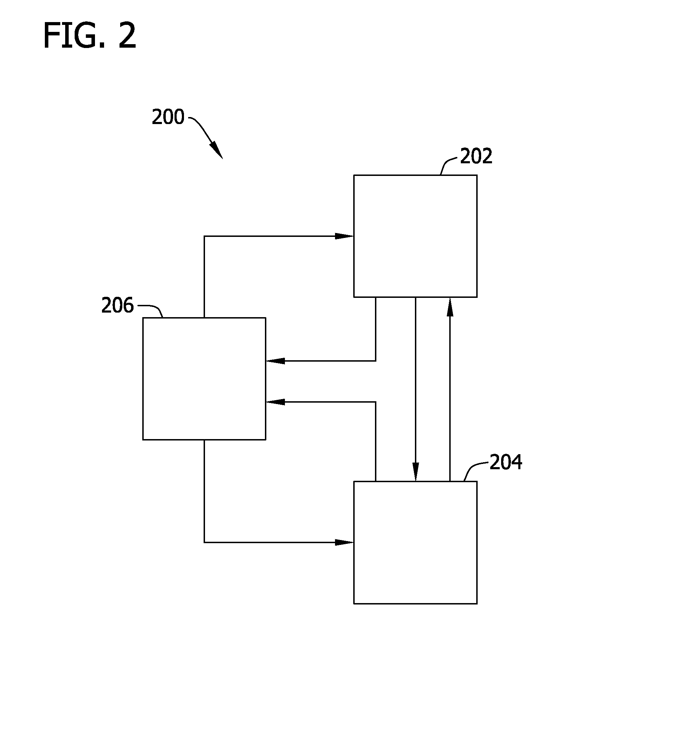

Fig. 2 is a block diagram of a plurality of software tools 200 that may be used with, or included within, a computing device such as server 100 (shown in Fig. 1). More specifically, tools 200 may be used to select or recommend a workscope for a machine or a system, such as, without limitation, for a gas turbine engine of an aircraft. In the exemplary embodiment, each software tool 200 is included within a separate server 100, and each server 100 is communicatively coupled to each other server 100 such that the outputs of tools 200 are provided to each other tool 200 as described herein. Alternatively, one or more tools 200 may be included within the same server 100. In the exemplary embodiment, tools 200 include a prediction tool 202, a financial model tool 204, and an analyzer tool 206 that are each coupled together in data communication.

In the exemplary embodiment, one or more tools 200 include a user interface, such as user interface 108 (shown in Fig. 1) to receive input from a user. In addition, one or more tools 200 output data to a display, such as display 106 (shown in Fig. 1), and the data may be displayed to the user.

Prediction tool 202 generates or identifies one or more workscopes from which a workscope that meets a predefined criterion or criteria can be selected. Prediction tool 202 receives inputs from other tools 200, from the user, and/or from another system or device. In the exemplary embodiment, prediction tool 202 receives engine information from analyzer tool 206, and receives workscope financial information from financial model tool 204. More specifically, in the exemplary embodiment, the engine information received from analyzer tool 206 includes, without limitation, an amount of time that engine has been in use since a most recent maintenance event, an amount of time that one or more engine components have been in use since the most recent maintenance or repair event, one or more components that have failed, and/or any other data that enables prediction tool 202 to function as described herein. The workscope financial information received from financial model tool 204 includes a financial impact of each maintenance activity defined within each workscope, such as a financial impact of maintenance or repair of each component at one or more future dates. As described herein, in the exemplary embodiment, the financial impact includes a cost of performing maintenance activities on the components. However, the financial impact additionally or alternatively includes a price, a profit, and/or any other financial effect associated with performing maintenance activities on the components. Alternatively or additionally, prediction tool 202 may receive other inputs, such as an engine condition, diagnostics data, workscope requirements, and/or any other input.

As used herein, the term "maintenance event" refers to an event in which the system (e.g., the engine) or components thereof are taken to a maintenance or repair facility, or "shop," to perform one or more maintenance activities on the system or components. Maintenance events are also known as "shop visits." These maintenance events may include failure driven events, where the system or component is taken to the facility as a result of a failure, and may also include non-failure driven visits, such as visits to the facility for preventative maintenance. As used herein, the term "maintenance activity" refers to performing maintenance on a system or component, and/or repairing the system or component.

Moreover, as used herein, the terms "workscope" and "scope of work" are used synonymously and refer to a strategy or a plan for performing one or more maintenance activities upon components of a system. A workscope may include, without limitation, a list of components within the system, one or more dates and/or times that a component should be repaired or have maintenance performed on it, an expected cost of completing each step or maintenance activity of the workscope, and/or one or more probabilities of each component failing or requiring a maintenance activity to be performed during a time period of the workscope. Alternatively or additionally, a workscope may include an amount of use and/or a number cycles (e.g., in the case of a component of a rotating machine) that the component has experienced (hereinafter referred to as a "cycle time" of the component), a cost to repair the component, and/or a cost to replace the component.

In the exemplary embodiment, prediction tool 202 generates an output indicative of one or more workscopes that are available to be performed on the engine (hereinafter referred to as "available workscopes"). In one embodiment, each workscope defines a different set of maintenance activities to be performed on the components than each other workscope. In the exemplary embodiment, prediction tool 202 identifies or generates a "base" workscope, a "full" workscope, and/or one or more alternative workscopes that are available to be performed on the engine. In the exemplary embodiment, the base workscope is a minimal set of maintenance activities to be performed on the engine and/or engine components. Alternatively, the base workscope may be a predetermined or "default" set of repair and/or maintenance activities to be performed on the engine and/or engine components. For example, the base workscope may include only repairing components that have failed and/or that are identified as "life-limited" components. As used herein, the term "life-limited" refers to a component that is required to be replaced and/or repaired within a predetermined time period. The alternative workscopes include additional, and/or different, repair and/or maintenance activities that may be performed on the engine and/or engine components as compared to the activities identified in the base workscope. The full workscope is a full set of maintenance activities to be performed on each component of the system. For example, the full workscope may include performing a maintenance activity on each component of the system when the system and/or components are taken to the maintenance facility, even if the components are not identified as requiring maintenance or repair. The available workscopes (e.g., the base workscope, the full workscope, and/or the alternative workscopes) are transmitted to financial model tool 204 and/or to analyzer tool 206.

Financial model tool 204, in the exemplary embodiment, receives inputs from prediction tool 202 and analyzer tool 206. Financial model tool 204 generates outputs indicative of financial information (e.g., the financial impact) associated with each workscope, and transmits the outputs to prediction tool 202 and analyzer tool 206. The financial information includes, for example, a cost of each maintenance activity of each workscope and/or any other financial impact of each maintenance activity. In the exemplary embodiment, financial model tool 206 receives a list of available workscopes from prediction tool 202 and/or from analyzer tool 206. In one embodiment, financial model tool 204 also receives data regarding a service contract or another instrument identifying repair and/or maintenance obligations for the engine and/or engine components, and a time period in which the service contract is in force. In the exemplary embodiment, financial model tool 204 calculates the cost and/or price (or other financial impact) of each maintenance activity of each workscope by calculating the repair and/or maintenance costs and/or prices, for example, associated with each activity identified in each workscope. In one embodiment, financial model tool 204 generates quotations for approval for one or more workscopes for a given set of requirements and generates a cost and price for the workscopes based on historical records and/or business plans. Financial model tool 204 transmits the determined cost and/or price, or other financial impact, of each available workscope (e.g., the cost of the maintenance activities of the base workscope, the full workscope, and/or of each alternative workscope) to prediction tool 202 and/or to analyzer tool 206.

In the exemplary embodiment, analyzer tool 206 receives inputs from prediction tool 202 and financial model tool 204. Moreover, analyzer tool 206 generates outputs and transmits the outputs to prediction tool 202 and financial model tool 204, as described more fully herein. Analyzer tool 206 receives the list of available workscopes and the financial information from prediction tool 202 and/or from financial model tool 204. Analyzer tool 206 selects and/or presents to the user a recommended workscope based on the inputs received. For example, analyzer tool 206 calculates a probability distribution of expected maintenance activities within each workscope and selects a workscope with the lowest expected cost and/or price. Alternatively, analyzer tool 206 selects a workscope that satisfies any other criterion or criteria identified by the user or by a system or device. For example, analyzer tool 206 determines an expected effect of each workscope and selects the workscope that has the expected effect that best satisfies the criterion or criteria. The expected effect may include, for example, one or more of an expected cost, an expected price, an expected profit, an expected cash flow, an expected maintenance facility loading, an expected spare engine capacity or availability, and/or an expected "time on wing" interval of the workscope. Accordingly, in the exemplary embodiment, analyzer tool 206 may select a workscope that has a lowest expected cost for the maintenance activities expected to be performed during a predefined time interval. However, it should be recognized that analyzer tool 206 may select a workscope in which the expected effect of the workscope satisfies any other criterion or criteria during the time interval.

In one embodiment, analyzer tool 206 quantifies the benefits and costs of the workscopes received by, for example, calculating the probability of each workscope's "time on wing" (e.g., each workscope's effect on the engine's time in operation) and financial output (e.g., an effect of each workscope on an amount of revenue expected to be generated by the engine as a result of each workscope). In one embodiment, for each available workscope, analyzer tool 206 presents to the user a series of probability distributions representing expected financial and operational future outcomes of performing the workscopes on the engine and/or engine components throughout a plurality of future repair and/or maintenance events.

In the exemplary embodiment, analyzer tool 206 receives inputs (hereinafter referred to as "external inputs") from a source external to server 100 (shown in Fig. 1), such as from a user or from a remote device or system. The external inputs include one or more of an engine condition, a condition of one or more engine components, an amount of time or engine cycles in which the engine and/or engine components have been in operation, an indication of a failing or failed engine component, a set or list of business constraints and/or constraints due to one or more service or other contracts, an amount of time that one or more service or other contracts are in force, a notification or an indication that one or more components are or include life-limited parts, and/or failure distributions computed from historical field data. Alternatively, any of the external inputs may be received by other tools 200 and may be transmitted to analyzer tool 206.

In the exemplary embodiment, analyzer tool 206 uses a state based solution or model to provide a logistical framework for selecting among workscope alternatives (e.g., to facilitate selecting an optimal or recommended workscope from the list of available workscopes). In one embodiment, analyzer tool 206 determines which workscope should be performed at each failure driven shop visit in order to minimize the total expected cost (e.g., of maintenance activities within a service contract) over a specified time interval (e.g., during the remaining time that the service contract is in effect). Analyzer tool 206 determines the lowest expected maintenance cost (or determines an expected effect that satisfies any other criterion or criteria) for the system associated with the service contract using a dynamic programming solution, such as, for example, Equations 1 and 2:

$$V_N(i) = \min_{a \in W_i} \left[ C(i,a) + \int_0^{T_i} f^{ij}\left(t \mid s_{i1}, s_{i2}, ..., s_{iN}, a\right) V_{N-1}(j) dt \right] \quad for \ \ 0 < N < M \qquad \text{Equation 1}$$

$$V_0(i) = C(i, a_0) \quad for \ N = 0 \qquad \text{Equation 2}$$

In the exemplary embodiment, the time interval for the system (e.g., the engine) associated with the service contract includes a plurality of stages. The stages for the system range from 1 to M, and each stage begins when the engine or component enters the shop. The system is defined to be in stage k when the probability that the system will reach the end of the time interval in M-k or fewer component failures is greater than P. In the exemplary embodiment, P is defined as the level of confidence of the system and is typically between 0.90 and 0.99. The system is in the last stage when the probability is greater than P that the system will reach the end of the time interval without experiencing any additional component failures.

The state of the system at a particular stage is defined by three elements. The first element is the time left until the end, T, of the time interval. For state i, this time is referred to as $T_i$. The second element is the time on each of the system components: $s_{i1}$, $s_{i2}$, ..., $s_{iN}$. The third element is the failing component (referred to as $k_i$). Therefore, state i is defined by the vector: $\{T_i, (s_{i1}, s_{i2}, ..., s_{iN}), k_i\}$.

Moreover, referring to Equations 1 and 2, $V_N(i)$ is the minimal expected cost when N stages remain and the system is in state i; C(i, a) is the current cost of making decision "a" when the system is in state i; and $f^{ij}(t|s_{i1}, s_{i2}, ...s_{iN}, a)$ is a probability density or distribution function for moving from state i to state j in t cycles (time units) when decision "a" is made. $T_i$ is the time left until the end, T, when in state i. $W_i$ is the set of all available work scopes when in state i, and $a_0$ is the decision associated with the base (or minimal) work scope.

In the exemplary embodiment, analyzer tool 206 selects a workscope having the lowest expected cost over the entire time interval ending at time T. The time interval may be defined as the remaining length that a service contract is in force, a life expectancy of the engine and/or components, and/or any other time period. Alternatively, analyzer tool 206 presents the expected cost of each available workscope to a user, and the user selects a workscope that has the lowest cost over the time interval, or that meets any other criteria of the user.

During operation, a user and/or a remote device or system enters external inputs into one or more tools 200, such as analyzer tool 206 and/or financial model tool 204. In the exemplary embodiment, financial model tool 204 "calls" prediction tool 202, or causes prediction tool 202 to execute. Prediction tool 202 generates or identifies a list of available workscopes and transmits the list of workscopes to financial tool and to analyzer tool 206. Financial model tool 204 also calls analyzer tool 206 to analyze the available workscopes and to generate probability distributions for the workscopes, as well as price and/or cost quotes for each workscope. Analyzer tool 206 uses the probability distributions to select or present a recommended workscope to the user. Moreover, analyzer tool 206 presents a timeline view of the workscopes and/or the recommended workscope on display 106 to display probable costs and/or prices of subsequent maintenance activities on the engine and/or engine components. Accordingly, analyzer tool 206 can estimate the lifetime cost of an engine and/or engine components. In addition, analyzer tool 206 can be used to calculate a cost of performing a service contract by calculating expected probabilities of future maintenance activities on one or more components of the engine.

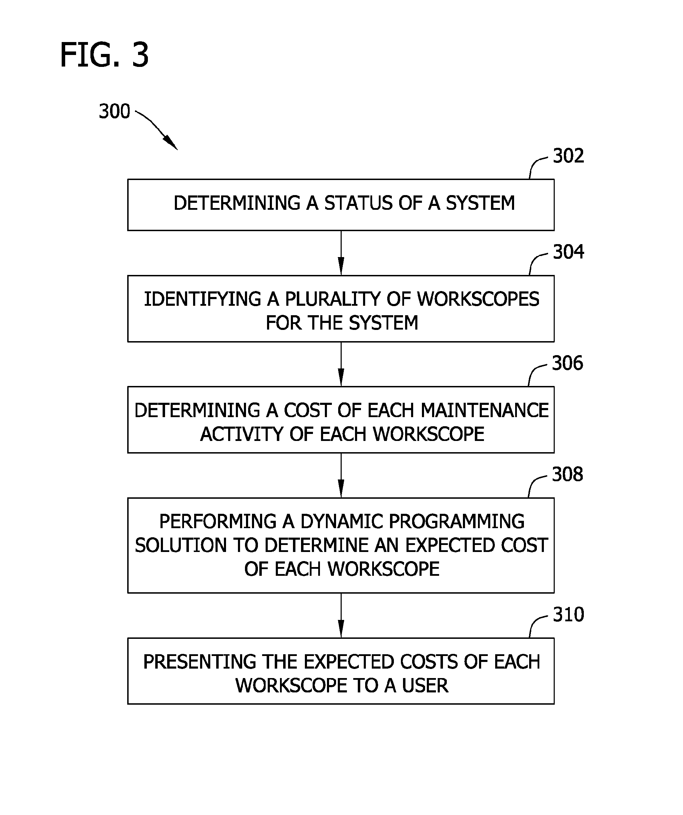

Fig. 3 is a flow diagram of an exemplary method 300 of selecting a workscope for a system, such as an engine of an aircraft. In the exemplary embodiment, method 300 is embodied within a plurality of instructions stored within memory device 104 (shown in Fig. 1) of one or more servers 100 (shown in Fig. 1). Moreover, in the exemplary embodiment, processor 102 of one or more servers 100 executes the instructions to perform the functions described herein and/or to cause the functions described herein to be performed.

In the exemplary embodiment, method 300 includes determining 302 a status of the system. For example, tools 200 receive data indicative of an amount of time that each component of system has been in use since a last maintenance visit, data indicative of whether one or more components have failed or require maintenance, and/or any other data that enables method 300 to function as described herein.

A plurality of workscopes available to be performed on the system (i.e., "available workscopes") is identified 304, for example, by prediction tool 202 (shown in Fig. 2). For example, prediction tool 202 may use a workscoping model that is capable of generating workscopes adapted to a wide variety of engine (or other system) configurations and/or conditions during a time interval. Each workscope includes a plurality of maintenance activities defined for each component of the system. For example, maintenance activities may include servicing or repairing a fan, a baffle, or other components of the system. Moreover, each workscope includes a plurality of maintenance events. In the exemplary embodiment, the maintenance events are events in which the system (e.g., the engine) is taken to a maintenance facility (also known as a "shop visit") for performing one or more maintenance activities on one or more components of the system.

In the exemplary embodiment, financial model tool 204 determines 306 a cost of each maintenance activity defined in each workscope. For example, financial model tool 204 receives data representative of a typical cost of performing each maintenance activity on each component based on historical data for each component. Analyzer tool 206 receives the available workscopes from prediction tool 202 and the costs of each maintenance activity within each workscope from financial model tool 204. Analyzer tool 206 performs 308 a dynamic programming solution using a probability distribution of maintenance activities to determine an expected cost of each workscope. More specifically, in the exemplary embodiment, analyzer tool 206 performs 308 or solves Equations 1 and 2 to determine the expected cost of each workscope during a time interval identified by a user or by a device or system. In one embodiment, the time interval is a remaining amount of time that a service contract associated with the system is in force.

Analyzer tool 206 presents 310 the expected costs of each workscope to a user, for example, through display 106 (shown in Fig. 1) such that the user may select a desired workscope. For example, the user may select the workscope that has the lowest total cost over the time interval. Alternatively or additionally, analyzer tool 206 selects the workscope having the lowest total cost over the time interval and presents the selected workscope, the remaining available workscopes, and/or the costs of each workscope to the user.

As described herein, a server includes a plurality of software tools that facilitate selecting a workscope for a system, such as an engine of an aircraft. A prediction tool generates or identifies a plurality of workscopes for the system, and each workscope defines a plurality of maintenance activities for a plurality of components of the system. A financial model tool receives the identified workscopes and determines an expected cost for the maintenance activities of each workscope for a plurality of future maintenance events. An analyzer tool receives the plurality of workscopes from the prediction tool, receives the expected financial impact of the maintenance activities from the financial model tool, and determines an expected effect of each workscope during a predefined time interval. The expected effect of each workscope is presented to a user to enable the user to select a desired workscope. Alternatively, the analyzer tool may select a workscope that has an expected effect that satisfies a predefined criterion or criteria over the time interval, and may present the selected workscope to the user. The analyzer tool performs a dynamic programming solution using a probability distribution of maintenance activities to determine the expected effect of each workscope, thus providing more certainty than prior art solutions. Accordingly, the user may be able to make more informed choices when selecting a workscope to be performed on a system, and may be able to quantify an expected impact of different maintenance activities on the overall cost of a system.

A beneficial effect of the systems and method described herein includes at least one of a) identifying a plurality of workscopes for a system, wherein each workscope defines a plurality of maintenance activities for a plurality of components of the system; b) determining an expected financial impact of maintenance activities of a plurality of workscopes for a plurality of future maintenance events; and c) determining an expected effect of each of a plurality of workscopes during a predefined time interval that includes future maintenance events.

Exemplary embodiments of methods and systems for use in selecting a workscope for a system are described above in detail. The methods and systems are not limited to the specific embodiments described herein, but rather, components of the systems and/or steps of the methods may be utilized independently and separately from other components and/or steps described herein. For example, the server may also be used in combination with other power systems and methods, and is not limited to practice with only the aircraft engine as described herein. Rather, the exemplary embodiment can be implemented and utilized in connection with many other system applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

**Claims**

1. A server (100) for use in selecting a workscope for a system, said server comprising:

   a prediction tool (202) configured to identify a plurality of workscopes for the system, wherein each workscope defines a plurality of maintenance activities for a plurality of components of the system;
   a financial model tool (204) coupled to said prediction tool (202), said financial model tool (204) configured to receive the plurality of workscopes and determine an expected financial impact of the maintenance activities of each workscope for a plurality of future maintenance events; and
   an analyzer tool (206) coupled to said prediction tool (202) and to said financial model tool, said analyzer tool configured to:

      receive the plurality of workscopes from said prediction tool (202);
      receive the expected financial impact of the maintenance activities from said financial model tool (204); and
      determine an expected effect of each workscope during a predefined time interval that includes the future maintenance events.

2. A server (100) in accordance with Claim 1, wherein the expected effect includes at least one of an expected cost, an expected price, an expected profit, an expected cash flow, an expected maintenance facility loading, an expected spare engine capacity, and an expected time on wing interval of the workscope, wherein said analyzer tool (206) is configured to select a workscope that satisfies at least one predefined criterion during the predefined time interval.

3. A server (100) in accordance with either of Claim 1 or 2, wherein said analyzer tool (206) is configured to present the expected effect of each workscope to a user.

4. A server (100) in accordance with any preceding Claim, wherein the predefined time interval is a remaining length of time in which a service contract associated with the system is in force.

5. A server (100) in accordance with any preceding Claim, wherein the plurality of workscopes includes a base workscope and a full workscope, the base workscope includes performing maintenance activities on at least one component of the plurality of components that has failed, and the full workscope includes performing maintenance activities on each component of the plurality of components.

6. A server (100) in accordance with any preceding Claim, wherein said analyzer tool (206) is configured to perform a dynamic programming solution using a probability distribution of the maintenance activities to determine the expected effect of each workscope.

7. A server (100) in accordance with Claim 6, wherein the dynamic programming solution comprises:

$$V_N(i) = \min_{a \in W_i} \left[ C(i,a) + \int_0^{T_i} f^{ij}(t \mid s_{i1}, s_{i2}, \ldots, s_{iN}, a) V_{N-1}(j) dt \right] \quad for \ \ 0 < N < M$$

wherein:

M is a number of stages within a time interval of the system;
N is a number of stages remaining within the time interval;
$V_N(i)$ is a minimal expected cost when N stages remain and the system is in a state i;
C(i, a) is a current cost of making a decision "a" when the system is in state i;
$f^{1j}(t|s_{i1}, s_{i2},\ldots s_{iN}, a)$ is a probability density function for moving from state i to a state j in t cycles when the decision "a" is made;
$T_i$ is a time left until an end T of the time interval when in state i; and
$W_i$ is a set of all available workscopes when in state i.

8.  A server (100) in accordance with any preceding Claim, wherein said prediction tool (202) is configured to identify each workscope of the plurality of workscopes, wherein each workscope defines a different plurality of maintenance activities to be performed on the components than each other workscope.

9.  A computer-readable medium (104) including computer-executable instructions stored thereon that, when executed by a processor (102), cause the processor (102) to:

    identify a plurality of workscopes for the system, wherein each workscope defines a plurality of maintenance activities for a plurality of components of the system;
    determine an expected financial impact of the maintenance activities of each workscope for a plurality of future maintenance events; and
    determine an expected effect of each workscope during a predefined time interval that includes the future maintenance events.

10. A computer-readable medium (104) in accordance with Claim 9, wherein the expected effect includes at least one of an expected cost, an expected price, an expected profit, an expected cash flow, an expected maintenance facility loading, an expected spare engine capacity, and an expected time on wing interval of the workscope, and wherein the computer-executable instructions, when executed by the processor (102), cause the processor (102) to select a workscope that satisfies at least one predefined criterion during the predefined time interval.

11. A computer-readable medium in accordance with either of Claim 9 or 10, wherein the computer-executable instructions, when executed by the processor (102), cause the processor (102) to present the expected effect of each workscope to a user.

12. A computer-readable medium in accordance with any of Claims 9 to 11, wherein the computer-executable instructions, when executed by the processor (102), cause the processor (102) to determine an expected effect of each workscope during a remaining length of time in which a service contract associated with the system is in force.

13. A computer-readable medium in accordance with any of Claims 9 to 12, wherein the computer-executable instructions, when executed by the processor (102), cause the processor (102) to identify a base workscope and a full workscope, the base workscope includes performing maintenance activities on at least one component of the plurality of components that has failed, and the full workscope includes performing maintenance activities on each component of the plurality of components.

14. A computer-readable medium in accordance with any of Claims 9 to 13, wherein the computer-executable instructions, when executed by the processor (102), cause the processor (102) to perform a dynamic programming solution using a probability distribution of the maintenance activities to determine the expected effect of each workscope.

# FIG. 1

100

102     104

110     108     106

FIG. 2

# FIG. 3

300

302

DETERMINING A STATUS OF A SYSTEM

304

IDENTIFYING A PLURALITY OF WORKSCOPES
FOR THE SYSTEM

306

DETERMINING A COST OF EACH MAINTENANCE
ACTIVITY OF EACH WORKSCOPE

308

PERFORMING A DYNAMIC PROGRAMMING
SOLUTION TO DETERMINE AN EXPECTED COST
OF EACH WORKSCOPE

310

PRESENTING THE EXPECTED COSTS OF EACH
WORKSCOPE TO A USER

**Europäisches Patentamt**
**European Patent Office**
**Office européen des brevets**

# EUROPEAN SEARCH REPORT

Application Number

EP 12 19 0577

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités", JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, vol. 30, no. 11, 1 November 2007 (2007-11-01), pages 592-593, XP007905525, ISSN: 0170-9291 * Statement in accordance with the Notice from the European Patent Office dated 1 October 2007 concerning business methods(OJ 11/2007; p592-593) The claimed subject matter, with due regard to the description and drawings, relates to processes comprised in the list of subject matter and activities excluded from patentability under Art.52(2) and (3) EPC. The applicant is advised that in accordance with the established practice of the EPO, no search need be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present | 1-14 | INV. G06Q10/06 |
| | | | TECHNICAL FIELDS SEARCHED (IPC) |
| | | | G06Q |

The present search report has been drawn up for all claims

| Place of search | Date of completion of the search | Examiner |
|---|---|---|
| The Hague | 7 March 2013 | Nicoli, Félix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 12 19 0577

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | application. The notoriety of such prior art cannot reasonably be contested. No documentary evidence was therefore considered required. * ----- | | |

TECHNICAL FIELDS
SEARCHED      (IPC)

The present search report has been drawn up for all claims

| Place of search | Date of completion of the search | Examiner |
|---|---|---|
| The Hague | 7 March 2013 | Nicoli, Félix |

EPO FORM 1503 03.82 (P04C01)